# EUROPEAN PATENT APPLICATION

(11) **EP 1 363 194 A1**
(43) Date of publication of application: **19.11.2003**
(21) Application number: 02710452.0
(22) Date of filing: 01.02.2002
(51) Int. Cl.: G06F 13/00, G06F 17/21

(54) **TRANSMITTER, RECEIVER, TRANSMITTER/RECEIVER, TRANSMITTING METHOD AND RECEIVING METHOD**

(30) Priority: 22.02.2001 JP 2001046362
(71) Applicant: Sony Corporation, Tokyo 141-0001 (JP)
(72) Inventor: NISHIO, Fumihiko, C/O SONY CORPORATION, Shinagawa-ku, Tokyo 141-0001 (JP); GONNO, Yoshihisa, C/O SONY CORPORATION, Shinagawa-ku, Tokyo 141-0001 (JP); TSUNODA, Tomohiro, C/O SONY CORPORATION, Shinagawa-ku, Tokyo 141-0001 (JP); YAMAGISHI, Yasuaki, C/O SONY CORPORATION, Shinagawa-ku, Tokyo 141-0001 (JP)
(74) Representative: Turner, James Arthur
(86) International application number: JP0200821
(87) International publication number: WO02067128

(57) **Abstract**

At step S1, update notification information is received through a receiving portion or a communication controlling portion. At step S2, the received update notification information is analyzed. To extract the contents of the update notification information described in the XML format, the update notification information is analyzed by an XML interpreting program or the like. At step S3, corresponding to the analyzed result, the receiving portion or the communication controlling portion is controlled so as to obtain update information corresponding to the update notification information. As a result, the update information is obtained. At step S4, the update information described in the XML format is analyzed by an analyzing portion so as to obtain the updated content. At step S5, a content stored in the storing portion is updated corresponding update information as the analyzed result.

## Description

### Technical Field

The present invention relates to a transmitting apparatus, a receiving apparatus, a transmitting and receiving apparatus, a transmitting method, and a receiving method used in the art of for example a technology for distributing data to many and unspecified people and for effectively updating and managing distributed data.

### Background Art

So far, many methods for data distribution systems have been proposed. For example, in the present, on the Internet, data described in the HTML (Hyper Markup Language) using the WWW (World Wide Web) corresponding to the HTTP (Hyper Text Transfer Protocol) is distributed. In the HTML, a multimedia content is described using tags that are presentation elements as functions such as presentation attributes and link attributes. The HTML is a logical structure descriptive language based on the SGML (Standard Generalized Markup Language), which is an international standard of the ISO (International Organization for Standardization).

There is a possibility of which distributed data contains data that is partly changed time by time. For example, weather forecasts and news topics are frequently changed partly, not entirely. In a conventional data distribution system using the WWW, even if a part of a web page is changed, the entire document is retransmitted.

In contrast, in a difference update protocol that has been proposed by the applicant of the present invention as Japanese Patent Laid-Open Publication No. 10-303983 and a protocol format described in Japanese Patent Laid-Open Publication No. 11-306068, update notification information that represents that the content has been changed and update information that represents the contents of the update are transmitted so that information of the content has been partly changed. As a result, data can be effectively updated.

Therefore, an object of the present invention is to provide a transmitting apparatus, a receiving apparatus, a transmitting and receiving apparatus, a transmitting method, and a receiving method that allow the efficiency of a process performed by the receiving apparatus for the protocol format disclosed in Japanese Patent Laid-Open Publication No. 11-306086 to be further improved. In particular, the present invention is adapted to update a content using a predetermined document format used to describe content data, for example difference update notification information and update information described in a format similar to the XML format. According to the present invention, the function of the difference updating process performed on the receiving apparatus side can be accomplished in the same manner as the process for content data. As a result, the efficiency of the process performed on the receiving apparatus is improved. In addition, the process for creating update notification information performed by the transmitting apparatus side can be effectively performed.

### Disclosure of the Invention

To solve the forgoing problem, claim 1 of the present invention is a transmitting apparatus for transmitting data for a content to be provided, the transmitting apparatus comprising:
content storing means for storing content data to be transmitted;
content operating means for inputting data to the content storing means or updating data stored in the content storing means;
update notification information creating means for detecting that data has been updated by the content operating means and creating update notification information which notifies a receiving side that the data has been updated;
update information creating means for creating update information which represents contents of an update of a content; and
transmitting means for transmitting a content stored in the content storing means, the update notification information, and the update information,
wherein a content stored in the content storing means has been described in a predetermined document format, and
wherein the update notification information creating means creates update notification information which has been described in the predetermined document format.

Claim 4 of the present invention is a receiving apparatus for receiving data for a content which has been provided, the receiving apparatus comprising:
receiving means for receiving data;
content storing means for storing content information received by the receiving means;
update notification information processing means for processing update notification information received by the receiving means;
updating processing means for processing update information received by the receiving means; and
analyzing means for analyzing the content, the update notification information, and the update information,
wherein a content stored in the content storing means has been described in a predetermined document format, and
wherein the update notification information has been described in the predetermined document format.

Claim 8 of the present invention is a transmitting and receiving apparatus having a transmitting apparatus for transmitting data for a content to be provided and a receiving apparatus for receiving data for a content which has been provided,
the transmitting apparatus comprising:
content storing means for storing content data to be transmitted;
content operating means for inputting data to the content storing means or updating data stored in the content storing means;
update notification information creating means for detecting that data has been updated by the content operating means and creating update notification information which notifies a receiving side that the data has been updated;
update information creating means for creating update information which represents contents of an update of a content; and
transmitting means for transmitting a content stored in the content storing means, the update notification information, and the update information,
wherein a content stored in the content storing means has been described in a predetermined document format, and
wherein the update notification information creating means creates update notification information which has been described in the predetermined document format,
the receiving apparatus comprising:
receiving means for receiving data;
content storing means for storing content information received by the receiving means;
update notification information processing means for processing update notification information received by the receiving means;
updating processing means for processing update information received by the receiving means; and
analyzing means for analyzing the content, the update notification information, and the update information,
wherein a content stored in the content storing means has been described in a predetermined document format, and
wherein the update notification information has been described in the predetermined document format.

Claim 9 of the present invention is a transmitting method for transmitting data for a content to be provided, the transmitting method comprising the steps of:
updating data of a content stored in storing means;
detecting that data has been updated at the content operating step and creating update notification information which notifies a receiving side that the data has been updated;
creating update information which represents an update process for a content; and
transmitting the content, the update notification information, and the update information,
wherein a content stored in the content storing means has been described in a predetermined document format, and
wherein the update notification information creating step is performed by creating update notification information which has been described in the predetermined document format.

Claim 12 of the present invention is a receiving method for receiving data for a content which has been provided, the receiving method comprising the steps of:
receiving data;
storing content information out of the data received at the receiving step;
processing update notification information received at the receiving step;
processing update information received at the receiving step; and
analyzing the content, the update notification information, and the update information,
wherein a content stored at the content storing step has been described in a predetermined document format, and
wherein the update notification information has been described in the predetermined document format.

According to the present invention, a document described in a predetermined document format for example the XML format is updated using update notification information and update information that are described in a document format similar thereto for example the XML format. As a result, the efficiency of the process performed by the receiving apparatus can be improved. In addition, a process for a document described in a predetermined document format and a process for update notification described in a document format similar thereto can be shared by the transmitting apparatus and the receiving apparatus. As a result, the cost and load for the processes can be reduced.

### Brief Description of Drawings

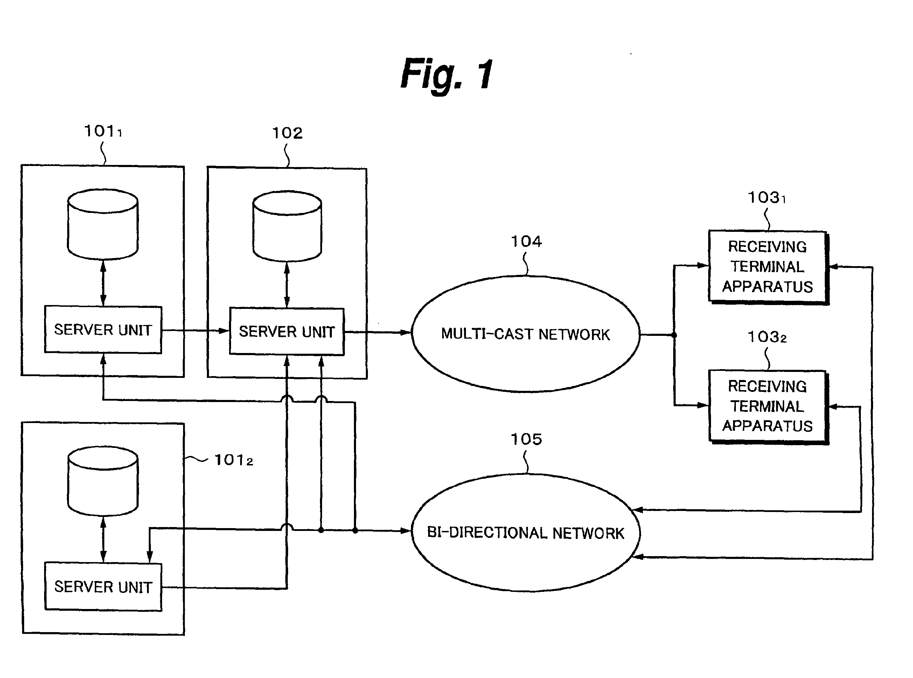

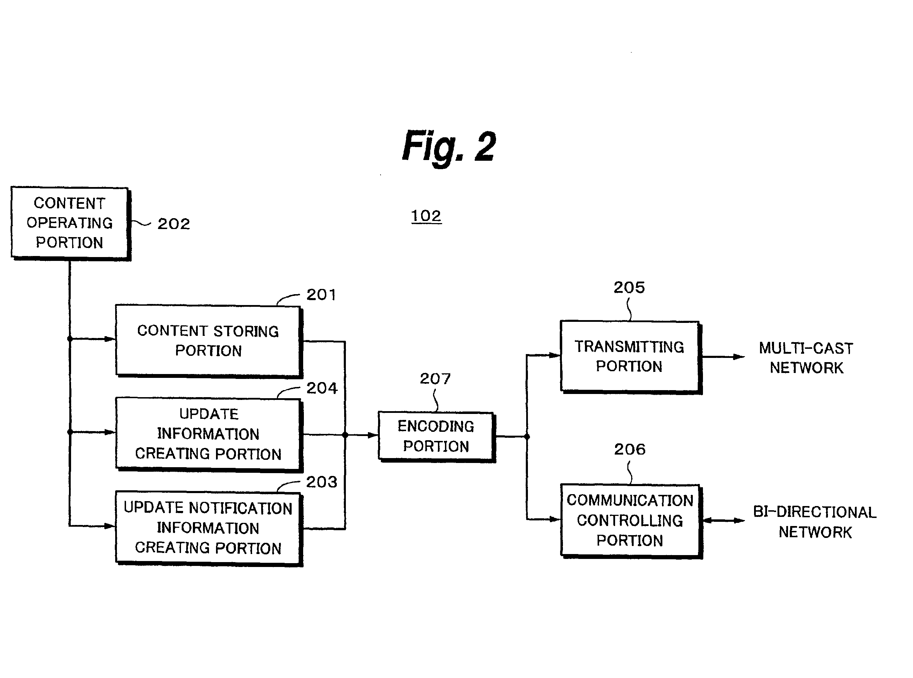

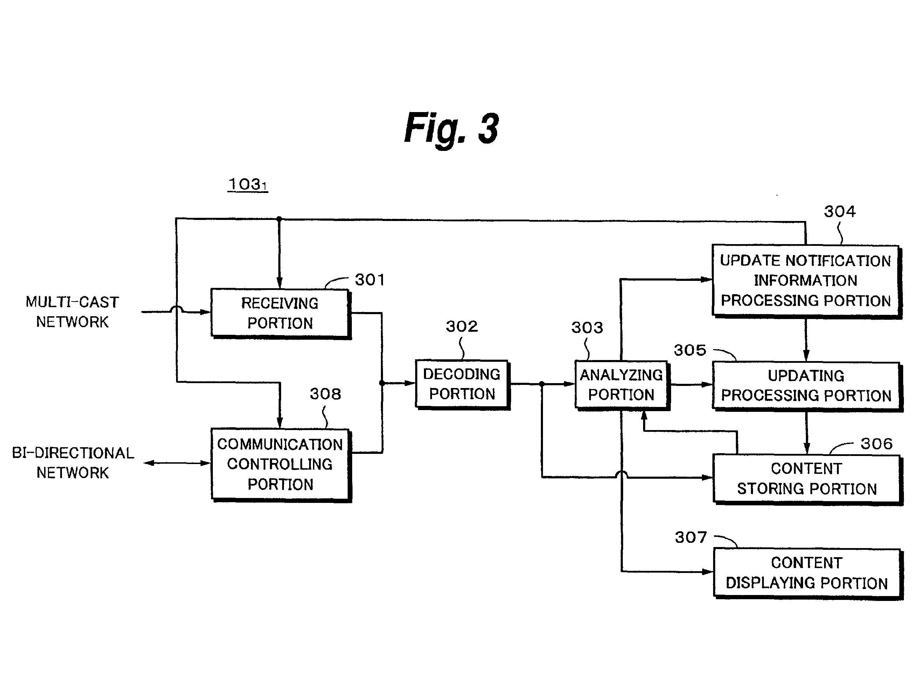

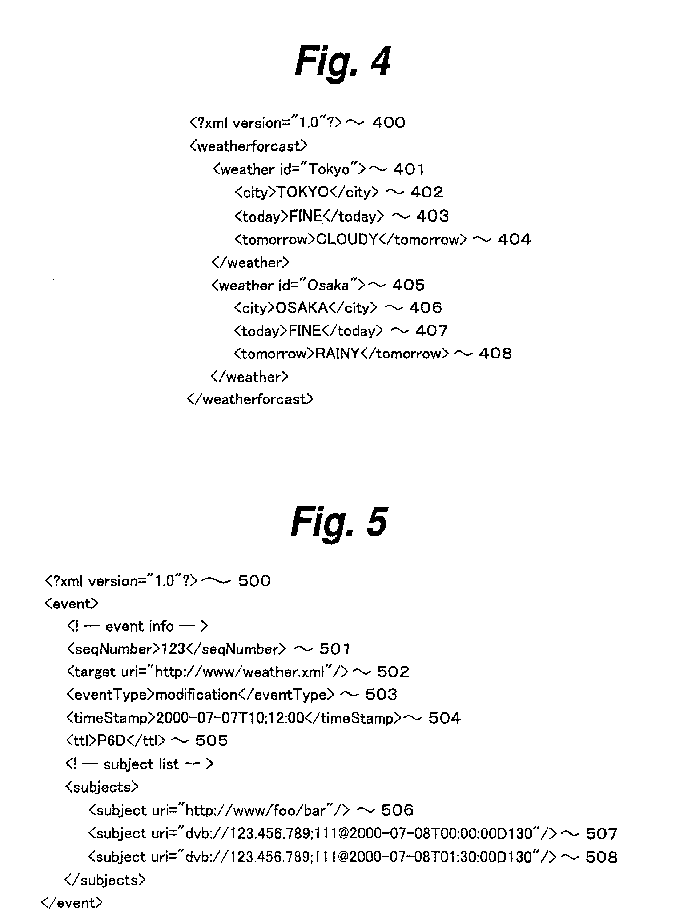

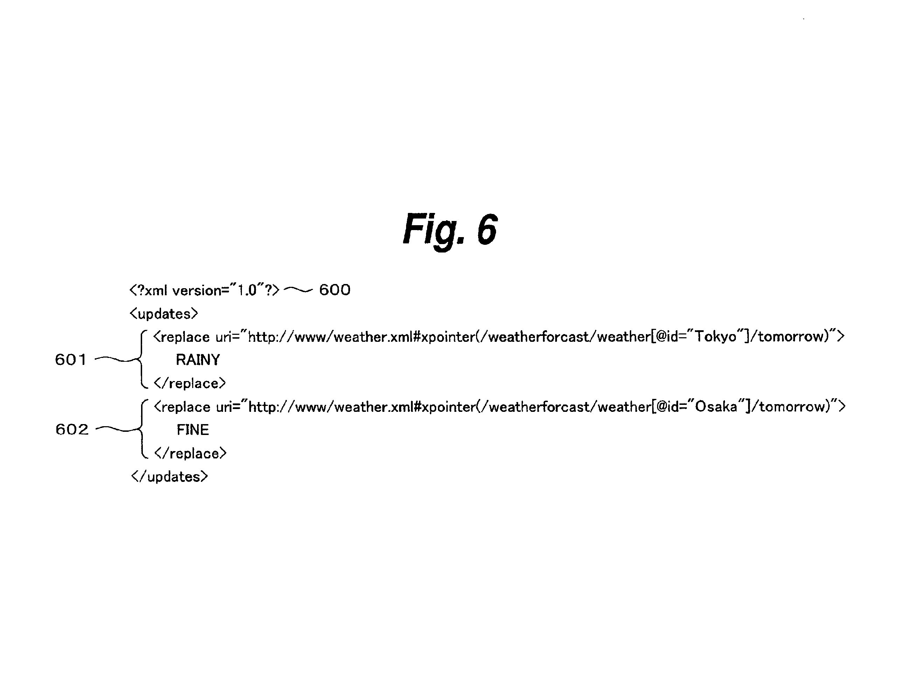

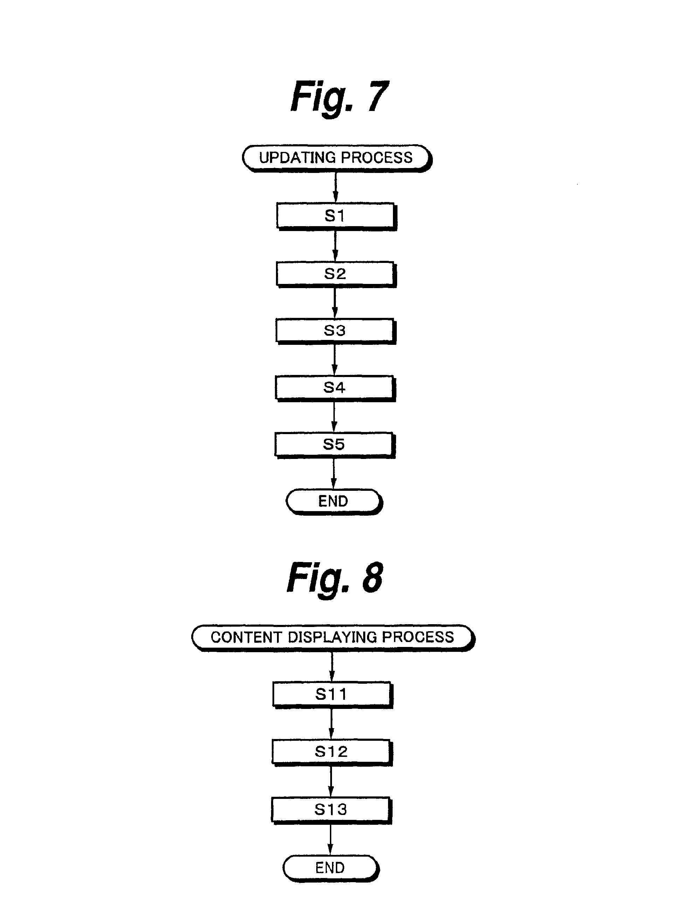

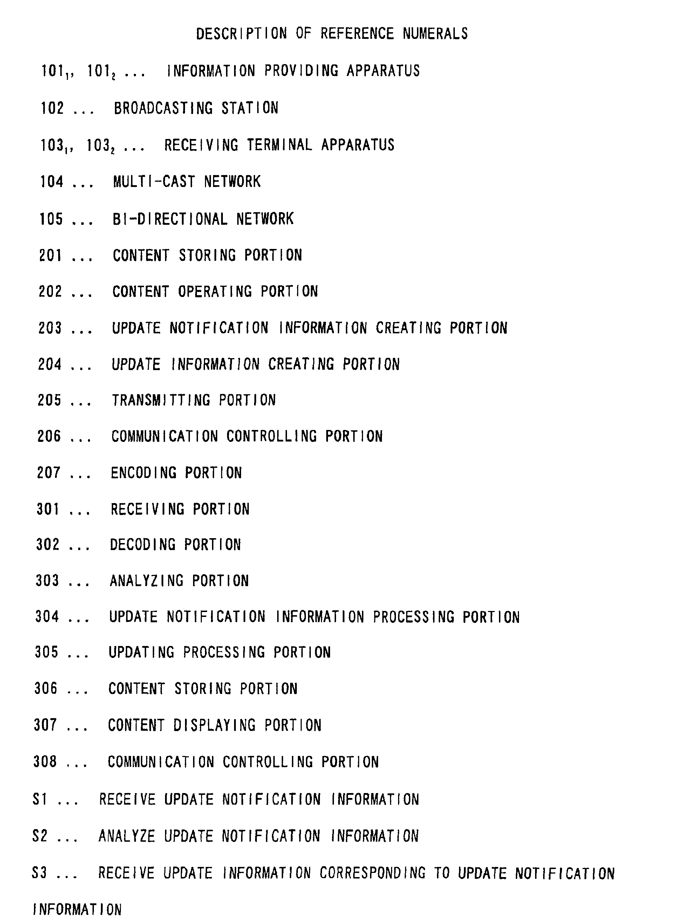

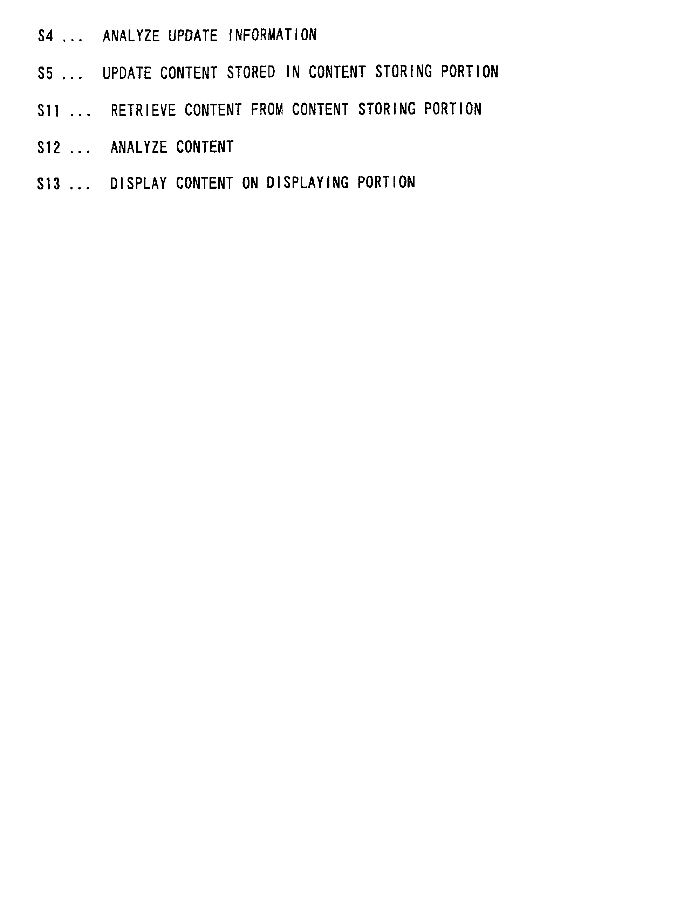

Fig. 1 is a block diagram showing the structure of a content providing system according to an embodiment of the present invention; Fig. 2 is a block diagram showing an example of the structure of a broadcasting station according to an embodiment of the present invention; Fig. 3 is a block diagram showing an example of the structure of a receiving terminal apparatus according to an embodiment of the present invention; Fig. 4 is a schematic diagram showing an example of a data format of content information of a weather forecast, the content information having been described in the XML; Fig. 5 is a schematic diagram showing an example of a data format of update notification information described in the XML; Fig. 6 is a schematic diagram showing an example of a data format of update information described in the XML; Fig. 7 is a flow chart showing an updating process for a content by the receiving terminal apparatus; and Fig. 8 is a flow chart showing a displaying process for a content by the receiving terminal apparatus.

### Best Modes for Carrying out the Invention

Next, a content providing system according to an embodiment of the present invention will be described. Fig. 1 shows an example of the system according to the embodiment. The system is composed of information providing apparatuses designated by reference numeral 101₁ and 101₂, a broadcasting station designated by reference numeral 102, receiving terminal apparatuses designated by reference numerals 103₁ and 103₂, a multi-cast network designated by reference numeral 104, and a bi-directional network designated by reference numeral 105.

The information providing apparatuses 101₁ and 101₂ have respective server units that store data of contents (also called objects) to be provided to the receiving terminal apparatuses. An example of content data is an WWW page described in the XML. The information providing apparatuses 101₁ and 101₂ are connected to the broadcasting station 102 and the receiving terminal apparatuses 103₁ and 103₂ through the bi-directional network 105.

Likewise, the broadcasting station 102 has a database that stores content data to be provided to the receiving terminal apparatuses. The broadcasting station 102 is connected to the receiving terminal apparatuses 103₁ and 103₂ through the multi-cast network 104. The broadcasting station 102 can provide content data to the receiving terminal apparatuses 103₁ and 103₂. In addition, the broadcasting station 102 can receive content data from the information providing apparatuses 101₁ and 101₂ through the bi-directional network 105 or a dedicated line and provide content data to the receiving terminal apparatuses 103₁ and 103₂ through the multi-cast network 104. A real example of the multi-cast network is a broadcast (a digital broadcast such as a satellite broadcast or a ground wave broadcast).

The receiving terminal apparatuses 103₁ and 103₂ receive and store contents and provide them to the users. Information of contents is transmitted through the multi-cast network 104 and stored in the receiving terminal apparatuses 103₁ and 103₂. Alternatively, information of contents is obtained on demand through the bi-directional network 105.

Fig. 2 shows an example of the structure of the broadcasting station 102. A content storing portion designated by reference numeral 201 stores data of contents to be provided to the receiving terminal apparatuses 103₁ and 103₂. In this example, the receiving terminal apparatuses 103₁ and 103₂ store contents described in a predetermined document format, for example the XLM, which is a content descriptive language. In other words, the content storing portion 201 stores files encoded corresponding to the XML.

Contents are input to the content storing portion 201 and contents stored therein are updated by a content operating portion 202. When the content operating portion 202 updates a content stored in the content storing portion 201, an update notification information creating portion 203 creates update notification information that represents that the content has been updated. In addition, when the content operating portion 202 updates a content stored in the content storing portion 201, an update information creating portion 204 creates update information. The created update information is a script that causes a pre-updated content to be updated.

A content stored in the content storing portion 201, update notification information created by the update notification information creating portion 203, and update information created by the update information creating portion 204 are supplied to an encoding portion 207. The encoding portion 207 converts a content, update notification information, and update information into a predetermined transmission format. The transmission format that is used should comply with the network through which a content, update notification information, and update information are transmitted.

Output information of the encoding portion 207 is transmitted from a transmitting portion 205 to the receiving terminal apparatuses 103₁ and 103₂ through the multi-cast network 104. Output information of the encoding portion 207 can be transmitted from the transmitting portion 205 to the receiving terminal apparatus 103₁ and 103₂ through the bi-directional network 105 corresponding to requests issued from the receiving terminal apparatuses 103₁ and 103₂. The information providing apparatus 101₁ and 101₂ each have the same structure as the forgoing broadcasting station 102. However, normally, the information providing apparatuses 101₁ and 101₂ do not have the transmitting portion 205 shown in Fig. 2.

Fig. 3 shows an example of the structure of the receiving terminal apparatus 103₁. The other receiving terminal apparatus 103₂ has the same structure as the receiving terminal apparatus 103₁. Reference numeral 301 represents a receiving portion. The receiving portion 301 receives content data, update notification information, and update information from the broadcasting station 102 through the multi-cast network 104. A communication controlling portion 308 performs a communication control so as to receive content data, update notification information, and update information from the broadcasting station 102 and the information providing apparatus 101₁ or 101₂ through the bi-directional network 105.

The received information is supplied to a decoding portion 302. The decoding portion 302 decodes the transmission format of the received content, update notification information, and update information. The decoded content is stored in a content storing portion 306. A analyzing portion 303 analyzes the decoded data. The analyzing portion 303 performs processes for the content, update notification information, and update information. In other words, the analyzing portion 303 interprets a content described in the XML, update notification information described in the XML, and update information described in the XML and hands the results to respective processing portions. For example, the content described in the XML is interpreted by the analyzing portion 303 and displayed on a content displaying portion 307.

As processing portions, besides the content displaying portion 307, an update notification information processing portion 304 and an updating processing portion 305 are disposed. The received update notification information is processed by the update notification information processing portion 304. The update notification information contains information representing an occurrence of an update and location information of update information. As a real update content, update information should be received. Thus, the location information is supplied to the receiving portion 301 or the communication controlling portion 308. Update information to be received is obtained through the receiving portion 301 or the communication controlling portion 308.

After the update information is analyzed by the analyzing portion 303, the analyzed result is processed by the updating processing portion 305. The updating processing portion 305 updates a content stored in the content storing portion 306 corresponding to update information received from the analyzing portion 303. A received content is stored in the content storing portion 306. Corresponding to a request issued by the user, the analyzing portion 303 analyzes the content. The content displaying portion 307 displays the analyzed content. The analyzing portion 303 performs an analyzing process for the XML format that is in common with a content, update notification information, and update information.

Next, with reference to Fig. 4, an example of a data format of content information described in the XML will be described. In this example, a content of a weather forecast is described. The content of the weather forecast is assigned an identifier ID that is a URI. A content, update information, and update notification information are correlated by the ID of the content. Reference numeral 400 represents a document format and version information. In the example shown in Fig. 4, the document format is the XML. The version information represents the lateness of the content. Whenever the content is updated, the version information is incremented.

Reference numeral 401 represents that the identifier ID, which identifies a weather forecast area, of the content of the weather forecast is "Tokyo." Reference numeral 402 represents that the city name is "Tokyo." Reference numeral 403 represents that the today's weather is "fine." Reference numeral 404 represents that the tomorrow's weather is "cloudy." Reference numeral 405 represents that the area ID is "Osaka." Likewise, reference numeral 406 represents a city name. Reference numeral 407 represents the today's weather. Reference numeral 408 represents the tomorrow's weather.

Fig. 5 shows an example of a data format of update notification information described in the XML. Update notification information contains information that represents an occurrence of an update and location information necessary for obtaining update information. Reference numeral 500 represents a document format and version information. Reference numeral 501 represents that the sequence number of an event (representing update notification information) is "123." Reference numeral 502 represents the ID of the content to be updated, namely, it represents that URI is "http://www/weather.xml." Reference numeral 503 represents that the update type is "modification." Reference numeral 504 represents that the date and time of the update is "2000-7-7 10:12." Reference numeral 505 represents that the validation period of the event is six days.

In addition, update notification information contains information necessary for obtaining update information (subject). In the example shown in Fig. 5, three kinds of obtaining methods are shown. Reference numeral 506 represents a URI with which update information is obtained from the bi-directional network. Reference numeral 507 represents information for obtaining update information from the multi-cast network, for example a digital broadcast. In the case of a digital broadcast, information that designates a packet of update information of a trans stream is contained. In the example shown in Fig. 5, the location of update information is described with information that designates a packet and broadcast time. Reference numeral 508 represents location information in the case that update information is broadcast on another broadcast date and time.

Fig. 6 shows an example of a data format of update information described in the XML. Reference numeral 600 represents a document format and version information. Update information contains an ID that identifies a content that has been updated, an update type, and the contents of the update. In Fig. 6, the ID of the content ID is a URI. The update type is "replace." Reference numeral 601 represents that the tomorrow's weather forecast of Tokyo in the update information shown in Fig. 4 was changed from "cloudy" to "rainy." Reference numeral 602 represents that the tomorrow's weather forecast of Osaka was changed from "rainy" to "fine."

Next, with reference to a flow chart shown in Fig. 7, the content updating process will be described. At step S1, the receiving terminal apparatus receives update notification information through the receiving portion 301 or the communication controlling portion 308. At step S2, the analyzing portion 303 analyzes the received update notification information. The update notification information has been described in the XML format as shown in Fig. 5. To extract the contents of the update notification information, it is analyzed by an XML interpreting program or the like.

At step S3, as the analyzed result, the update notification information processing portion 304 controls the receiving portion 301 or the communication controlling portion 308 so as to obtain update information corresponding to the update notification information. As a result, the update notification information processing portion 304 receives the update information. The received update information has been described in the XML format as shown in Fig. 6. At step S4, the analyzing portion 303 analyzes the update information so as to obtain the updated content. At step S5, the updating processing portion 305 updates the content stored in the storing portion 306 corresponding to the contents of the update.

Fig. 8 is a flow chart showing a content displaying process. At step S11, corresponding to a request issued by the user, a content to be displayed is retrieved from the content storing portion 306. The content is described in the XML format as shown in Fig. 4. At step S12, the analyzing portion 303 analyzes the contents. At step S13, the content displaying portion 307 displays the analyzed result.

Step S2 (analyzing update notification information) and step S4 (analyzing update information) shown in Fig. 7 and step S12 (analyzing content) shown in Fig. 8 are performed for a process for analyzing the XML format. These steps are common in analyzing update notification information, update information, and a content.

It should be noted that the present invention is not limited to the forgoing embodiment. However, without departing from the sprit of the present invention, various modifications and ramifications thereof can be performed. For example, besides the XML, other document formats such as SGML and MHEG can be used. In addition, the content storing unit of the receiving apparatus is not limited to a hardware unit disposed therein. Alternatively, a storing unit that can be accessed through an intra network can be used.

According to the present invention, as update notification information that notifies the receiving side of an update event of a content, a predetermined document format, for example the XML format, is used. Thus, a process for a content described in the XML format and a process for an event message can be shared with the receiving side. As a result, the cost and load of the receiving apparatus can be reduced.

In addition, on the transmitting side, on the infrastructure of which a content is distributed in the XML format such as the WWW, update notification information that notifies the receiving side of an update event can be transmitted in the same XML format as a content. As a result, the cost and load of the transmitting apparatus can be reduced.

## Claims

1. A transmitting apparatus for transmitting data for a content to be provided, the transmitting apparatus comprising:
content storing means for storing content data to be transmitted;
content operating means for inputting data to the content storing means or updating data stored in the content storing means;
update notification information creating means for detecting that data has been updated by the content operating means and creating update notification information which notifies a receiving side that the data has been updated;
update information creating means for creating update information which represents contents of an update of a content; and
transmitting means for transmitting a content stored in the content storing means, the update notification information, and the update information,
wherein a content stored in the content storing means has been described in a predetermined document format, and
wherein the update notification information creating means creates update notification information which has been described in the predetermined document format.

2. The transmitting apparatus as set forth in claim 1,
wherein the predetermined document format is the XML.

3. The transmitting apparatus as set forth in claim 1,
wherein the update information creating means creates the update information which has been described in the predetermined document format.

4. A receiving apparatus for receiving data for a content which has been provided, the receiving apparatus comprising:
receiving means for receiving data;
content storing means for storing content information received by the receiving means;
update notification information processing means for processing update notification information received by the receiving means;
updating processing means for processing update information received by the receiving means; and
analyzing means for analyzing the content, the update notification information, and the update information,
wherein a content stored in the content storing means has been described in a predetermined document format, and
wherein the update notification information has been described in the predetermined document format.

5. The receiving apparatus as set forth in claim 4, further comprising:
displaying means for displaying a content stored in the content storing means.

6. The receiving apparatus as set forth in claim 4,
wherein the predetermined document format is the XML.

7. The receiving apparatus as set forth in claim 4,
wherein the analyzing means analyzes the content, the update notification information, and the update information which haven been described in the predetermined document format.

8. A transmitting and receiving apparatus having a transmitting apparatus for transmitting data for a content to be provided and a receiving apparatus for receiving data for a content which has been provided,
the transmitting apparatus comprising:
content storing means for storing content data to be transmitted;
content operating means for inputting data to the content storing means or updating data stored in the content storing means;
update notification information creating means for detecting that data has been updated by the content operating means and creating update notification information which notifies a receiving side that the data has been updated;
update information creating means for creating update information which represents contents of an update of a content; and
transmitting means for transmitting a content stored in the content storing means, the update notification information, and the update information,
wherein a content stored in the content storing means has been described in a predetermined document format, and
wherein the update notification information creating means creates update notification information which has been described in the predetermined document format,
the receiving apparatus comprising:
receiving means for receiving data;
content storing means for storing content information received by the receiving means;
update notification information processing means for processing update notification information received by the receiving means;
updating processing means for processing update information received by the receiving means; and
analyzing means for analyzing the content, the update notification information, and the update information,
wherein a content stored in the content storing means has been described in a predetermined document format, and
wherein the update notification information has been described in the predetermined document format.

9. A transmitting method for transmitting data for a content to be provided, the transmitting method comprising the steps of:
updating data of a content stored in storing means;
detecting that data has been updated at the content operating step and creating update notification information which notifies a receiving side that the data has been updated;
creating update information which represents an update process for a content; and
transmitting the content, the update notification information, and the update information,
wherein a content stored in the content storing means has been described in a predetermined document format, and
wherein the update notification information creating step is performed by creating update notification information which has been described in the predetermined document format.

10. The transmitting method as set forth in claim 9,
wherein the predetermined document format is the XML.

11. The transmitting method as set forth in claim 9,
wherein the update information creating step is performed by creating the update information which has been described in the predetermined document format.

12. A receiving method for receiving data for a content which has been provided, the receiving method comprising the steps of:
receiving data;
storing content information out of the data received at the receiving step;
processing update notification information received at the receiving step;
processing update information received at the receiving step; and
analyzing the content, the update notification information, and the update information,
wherein a content stored at the content storing step has been described in a predetermined document format, and
wherein the update notification information has been described in the predetermined document format.

13. The receiving method as set forth in claim 12, further comprising the step of:
displaying a content stored at the content storing step.

14. The receiving method as set forth in claim 12,
wherein the predetermined document format is the XML.

15. The receiving method as set forth in claim 12,
wherein the analyzing step is performed by analyzing the content, the update notification information, and the update information which haven been described in the predetermined document format.
